# EUROPEAN PATENT APPLICATION

(11) **EP 4 467 317 A1**
(43) Date of publication of application: **27.11.2024**
(21) Application number: 23175070.4
(22) Date of filing: 24.05.2023
(51) Int. Cl.: B29C 45/24, B29C 45/34, B29C 33/38, B29C 45/26, B29C 45/00, B29C 33/00, B29C 33/30

(54) **A MOLD INSERT FOR INJECTION MOLDING, A MOLD FOR INJECTION MOLDING AND A METHOD FOR PRODUCING A MOLD INSERT FOR INJECTION MOLDING**

(71) Applicant: ABB Schweiz AG, 5400 Baden (CH)
(72) Inventor: Rzepecki, Michal, 30-650 Krakow (PL); Bednarowski, Dariusz, 31-874 Krakow (PL); Siwek, Artur, 31-421 Krakow (PL); Eck, Peter, 8514 Amlikon-Bissegg (CH); Rybak, Andrzej, 30-349 Krakow (PL)
(74) Representative: Wroblewski, Marcin Jan

(57) **Abstract**

A mold insert (1) for injection molding comprising a first half (2) having a contact surface (3), and a second half (4) having a contact surface (5). One of the halves (2, 4) comprises at least on a portion of its contact surface (3, 5) a sealing layer (6), wherein the sealing layer (6) fills at least a portion of the rough and porous contact surface (3, 5) of the one of the halves (2, 4), the sealing layer (6) has a shape corresponding to a shape of the contact surface (3, 5) of other of the halves (2, 4), and the sealing layer (6) is made of a material softer than a material said first and second halves (2, 4) of the mold insert (1) are made of and a material having heat resistance allowing to withstand an injection process.

## Description

### Technical field

The present invention relates to a mold insert for injection molding and a mold for injection molding. Furthermore, the present invention relates to a method for producing a mold insert for injection molding.

### Background of the invention

From Japanese patent JP1983031293B2 there is known a method for preparing a metal mold for molding parts, including an insert such as resin sealing of a semiconductor. In the disclosed method, a metal mold is subjected to satin-finishing. It allows for obtaining a roughness of a surface of the metal mold ranging from 5 to 15 µm. Further, a smooth relief shape is obtained by discharge processing or sandblasting. Moreover, the satin-finished surface is hard chrome plated or treated with a fluorocarbon polymer-complexed metals. The disclosed method solves a problem of providing a mold with improved mold releasability comparing to a conventional mirror-finished mold.

From American patent US6939500B2 there is known a method and apparatus for molding a sealing surface on a molded part. Said method comprises the steps of providing respectively in first and second mold halves first and second mold inserts, wherein each of the inserts has a sub-insert flash trimming component; movably supporting said sub-inserts in said associated inserts mold half for motion such that a minor parting line plane of said mold sub-inserts is orientable by such motion through a given range of travel including a position flush with the mold major parting line plane, closing the mold halves together, positioning said sub-inserts at a starting position such that the minor parting line plane is positioned at a given orientation relative to the flush planes position thereof, filling the complete mold cavity with molding material in a liquid state, and allowing the liquid molding material to harden at least to a self-sustaining solidification strength at least in the part sealing surface zone adjacent the mold-sub-inserts cavity-defining surfaces, moving the sub-inserts as a unit relative to the mold halves to thereby shift the minor parting line plane of the sub-inserts to thereby move, and thereby trim, any parting line flash resident between the sub-inserts to, a second predetermined position offset from the starting position whereby such sub-insert parting line flash that might otherwise remain resident on the sealing surface is substantially removed from its residence position on such surface at the starting position of said sub-inserts, moving the sub-inserts to their flush planes position to thereby bring the minor and major parting lines flush with one another, and opening the mold halves to remove the completed molded part. The disclosed method as well as apparatus eliminate a problem of a creation of parting line flash occurring in high pressure molding and casting in permanent molds, especially in cases when a molded or cast part has an external or internal surface of revolution that is to become a fluid sealing surface by receiving thereon or therein one of various forms of elastomeric annular seal members, such as an O-ring.

From Japanese patent application JP1989299014A there is known a method of preventing flash to occur by means of a design of elastomer mold. In said method, when shaping of the outer side of a molded part, an elastomer mold is used. Said elastomer mold is backed up with a female mold made of a metal. Thanks to that, the elastomer mold is soft and is shaped with fluid pressure (foaming pressure) lower than injection pressure. When performing said method, the form of a cavity of the elastomer mold is reversed precisely to a molded product and the elastomer mold is in a pressure contact with a male mold. As a result, even if a male mold side is not formed with favorable accuracy, at the time of mold clamping, the outward parting line is sealed and there is a small risk of flashes forming on it. The elastomer material needs to be such that it can sufficiently withstand the temperature of the melt injection material and does not have adhesiveness to the injection material.

American patent application US20160288384A1 discloses a mold fabrication element designed to prevent from flash occurring during a process of molding, especially in a case of molded parts with stepped outer surface regions. The mold fabrication element comprises hollowed volume defining an inner surface of said element such as a stepped inner surface. The inner surface of the mold fabrication element is designed to be put between halves of a mold and the inner surface is designed to define a respective outer surface of a portion of an injection molded part. The mold fabrication element can be made of steel, copper or aluminum. The mold fabrication element can be shaped like a washer or ring.

Further from American patent application US4741507A there is known a self-cleaning mold with a design allowing for reducing the amount of flash which occurs during a molding process. The self-cleaning mold comprises a lower half and an upper half. Further, the self-cleaning mold comprises a channel for conducting plastic from a central reservoir to a cavity for receiving plastic encapsulation of electronic devices. The channel has a sidewall designed to slope toward a gap between the faces of mold halves. Such a design provides wedged shaped region creating a barrier to plastic flowing into the gap. Thus, little if any flash is formed in gaps.

American patent US6290481B1 discloses a flash-free mold structure comprising a first molding piece having a junction side, a second molding piece having a junction side for coupling with the junction side of the first molding piece during a molding process. The second molding piece is formed with a resin passage for an encapsulating material to flow therethrough during the molding process. A flash-free mold structure comprises further a cutaway portion formed at a rim of the resin passage. The cutaway portion is dimensioned significantly smaller than the resin passage so as to allow the encapsulating material to flow into the cutaway proportion to accelerate the speed of absorbing heat of the molding pieces and then make the encapsulating material increased in viscosity. As a result, flow speed of the encapsulating material is retarded, thereby preventing the encapsulating material from entering a fissure between the first molding piece and the second molding piece during the molding process.

British patent application GB2155395A discloses a mold for flash-free molding of encapsulations of semiconductor devices or integrated circuits having protruding metallic inserts and a method for substantially flash-free molding of said encapsulations. The mold comprises a portion with a top half and a bottom half for forming of molded encapsulations. Said halves are made of metallic material. Further, said halves contain machined cavity portions. The mold further comprises sealing means mounted to each of said halves. The sealing means may be, for example, anchored at the ends of the halves or placed in grooves machined into the halve surfaces. The sealing means are made of a material having a greater thermal coefficient of expansion than a material the halves are made of, for example plastic of a soft metal like Teflon. The sealing means may have a form of plastic bands. Said mold portion surfaces as well as the sealing means surfaces may be subject to final machining. In turn, the method for flash-free molding of encapsulations comprising the steps of providing metallic halves of a mold portion for forming molded encapsulations, wherein the mold portion halves comprises cavities corresponding to an encapsulation to be molded, mounting sealing means to each of said mold portion halves, clamping a metallic insert between the mold portion halves and the sealing means; raising a temperature of the mold portion halves, sealing means, and metallic insert to provide a substantially bleed-free seal between the cavities and extremities of the metallic insert away from the cavities.

It is known from the prior art that mold inserts are characterized by high porosity and high surface roughness, so to avoid flash during an injection molding process, contact surfaces of halves forming them are subjected to additional treatment such as machining or polishing. Moreover, besides said additional treatment of the contact surfaces of said mold inserts, there are provided molds with dedicated constructions to either eliminate or reduce such flash. Unfortunately, these constructions are very complex. Thus, there is a need to provide a mold insert that prevents formation of flash during an injection process and eliminates the necessity to develop injection molds with complex constructions for this purpose. Further, there is a need to provide a method for producing a mold insert for injection molding which is simpler and faster than production known from methods of the prior art as well as provides the mold insert that prevents the occurrence of flash during an injection molding process.

Therefore, the first object of the invention is to provide a mold insert for injection molding that prevents formation of flash during an injection process and eliminates the necessity to develop injection molds with complex constructions for this purpose. The second object of the invention is to provide a method for producing a mold insert for injection molding which is simpler and faster than production known from methods of the prior art as well as provides the mold insert that prevents the occurrence of flash during an injection molding process.

### The Essence of the Invention

The object of the invention is a mold insert for injection molding comprising a first half having a contact surface, and a second half having a contact surface. The essence of the invention is that one of the halves comprises at least on a portion of its contact surface a sealing layer, wherein the sealing layer fills at least a portion of the rough and porous contact surface of the one of the halves, the sealing layer has a shape corresponding to a shape of the contact surface of the other of the halves, and the sealing layer is made of a material softer than a material said first and second halves of the mold insert are made of and a material having heat resistance allowing to withstand an injection process.

The application of the sealing layer at least on the portion of the contact surface of the one of the halves of the mold insert, wherein the sealing layer fills the at least a portion of the rough and porous contact surface of the one of the halves, the sealing layer has the shape corresponding to the shape of the contact surface of other of the halves, and the sealing layer is made of the material softer than the material said first and second halves of the mold insert are made of and the material having heat resistance allowing to withstand an injection process ensures improved tightness, and as a result sealing, between the contact surfaces of the first and second half compared to mold inserts known from the state of the art. Thus, the application of the sealing layer as disclosed prevents formation of flash during an injection process and eliminates the necessity to develop injection molds with complex constructions for this purpose.

Preferably, the sealing layer is located on the contact surface of the one of the halves around the edges of its cavity or core forming part.

The location of the sealing layer on the contact surface of the one of the halves around the edges of its cavity or core forming part ensures maintenance of improved tightness while reducing the amount of material used to form said sealing layer.

Preferably, a thickness of the sealing layer is from 5 µm to 500 µm.

Preferably, the sealing layer is made of lead, tin, zinc, aluminum, copper or alloys of these metals.

Preferably, the first half and the second half of the mold insert are prepared in a 3D printing process or a metal casting process.

Preferably, the first half and the second half of the mold insert are made of metal.

Preferably, the first half and the second half of the mold insert are made of tool steel, stainless steel, aluminum alloys, copper alloys, titanium alloys, zinc alloys or tin alloys.

Further, the object of the invention is a mold for injection molding comprising the disclosed mold insert.

Preferably, the mold and the mold insert according to the invention form a single body.

Furthermore, the object of the invention is a method for producing a mold insert for injection molding comprising the steps of preparing a first half and a second half of a mold insert, applying a sealing layer on a contact surface of one of the halves of the mold insert to fill at least a portion of the rough and porous contact surface of the one of the halves, wherein the sealing layer is made of a material softer than a material said first and second halves of the mold insert are made of and the material having heat resistance allowing to withstand an injection process, clamping the first half and the second half of the mold insert to form in the sealing layer a shape corresponding to a shape of a contact surface of the other of the halves of the mold insert, wherein during said clamping a force Fc higher than the yield strength of the material of the sealing layer and higher than a nominal mold clamping force is used, opening the first half and the second half of the mold insert.

The method according to the invention ensures production of a mold insert for injection molding which is simpler and faster than production known from methods of the prior art as well as provides the mold insert that prevents the occurrence of flash during an injection molding process.

Preferably, the sealing layer is applied on the contact surface of one of the halves of the mold insert around the edges of its cavity or core forming part.

Preferably, the sealing layer is applied on the contact surface of the one the halves of the mold insert by soldering, spraying, surfacing, pad welding, plating, electroplating or gluing.

Preferably, when the sealing layer is applied on the contact surface by soldering, spraying, surfacing or pad welding, the sealing layer is solidified before the step of clamping.

Preferably, solidification of the sealing layer is performed until a temperature of material of the sealing layer is below the melting point of said material.

Preferably, after the step of opening the first half and the second half of the mold insert, excess of the sealing layer formed during said clamping is removed.

The application of the step of removing the excess of the sealing layer formed during the step of clamping the first half and the second half of the mold insert ensures that an element molded during an injection process obtains the desired shape as well as does not jam in the mold insert and as a result in an injection mold.

### Advantages of the invention

The mold insert according to the invention has contact surfaces which can regenerate easier than contact surfaces known from the prior art.

The method according to the invention reduces time and costs needed to produce a mold insert.

The method according to the invention eliminates the need for additional treatment of contact surfaces of halves forming a mold insert such as machining or polishing.

### Description of the drawings

The subject of the invention is shown in the embodiments in a drawing, in which:

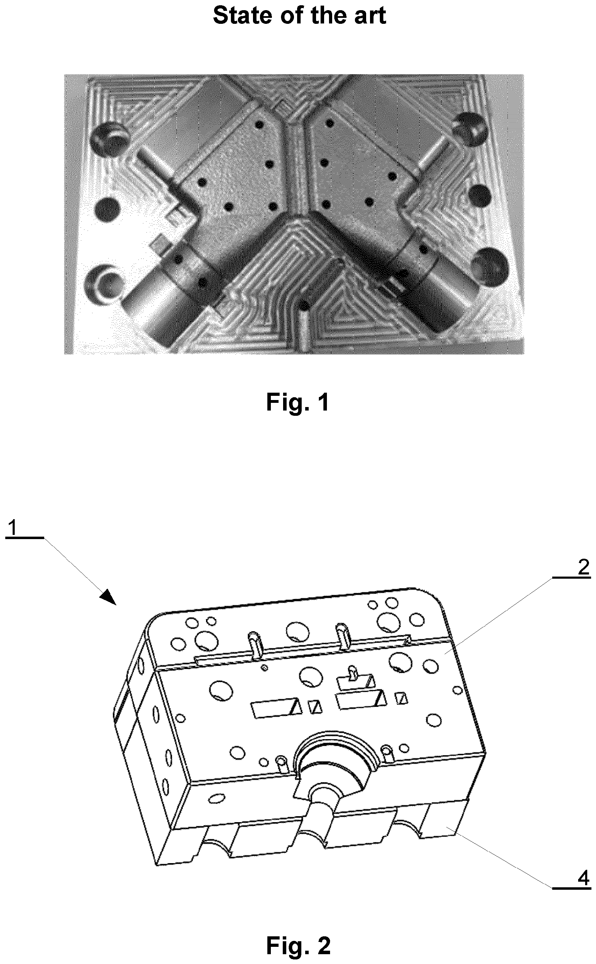

- Fig. 1: presents a half of a mold insert for injection molding with a machined parting plane known from the prior art,
- Fig. 2: presents a mold insert for injection molding according to the invention,

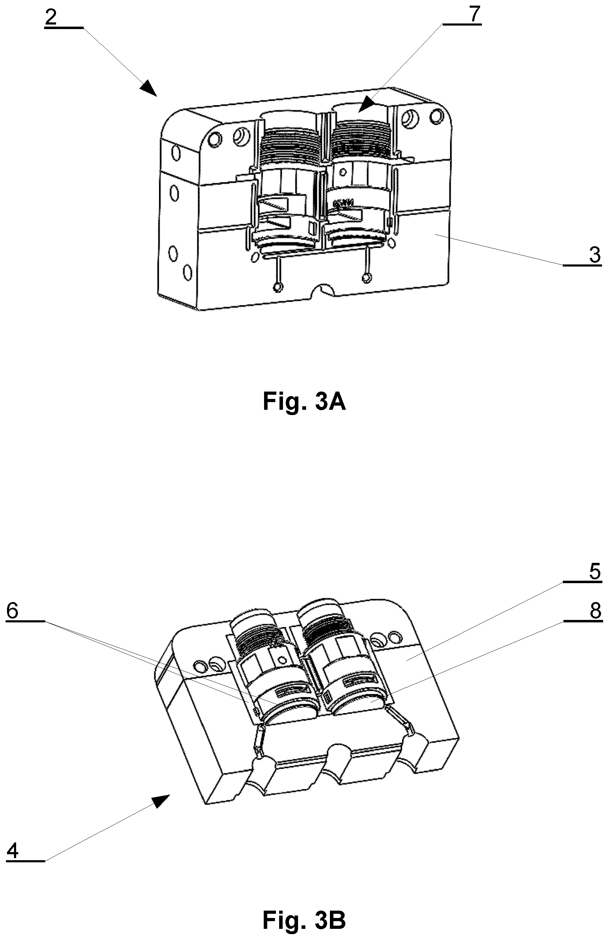

- Fig. 3A: presents a half of a mold insert for injection molding with a cavity according to the invention,
- Fig. 3B: presents a half of a mold insert for injection molding with a core forming part according to the invention,

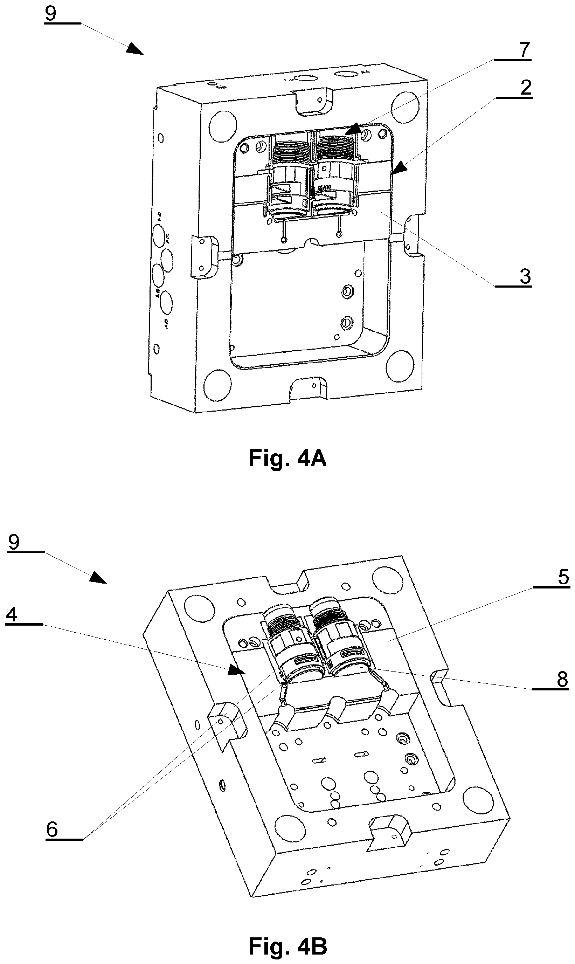

- Fig. 4A: presents a half of a mold for injection molding comprising a mold insert with a cavity according to the invention,
- Fig. 4B: presents a half of a mold for injection molding comprising a mold insert with a core forming part according to the invention,

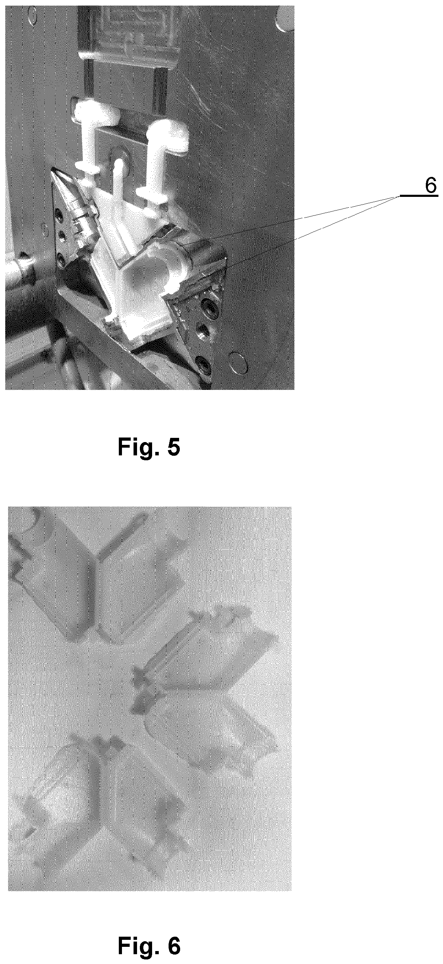

- Fig. 5: presents a mold insert according to the invention situated in a mold for injection molding,
- Fig. 6: presents parts fabricated with the usage of a mold insert according to the invention,

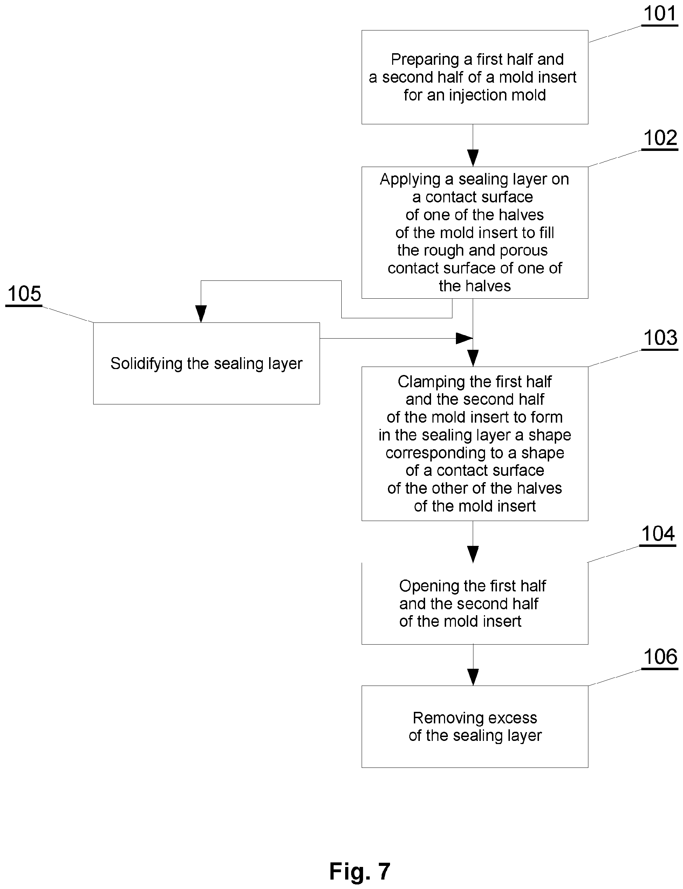

- Fig. 7: presents a flowchart of a method for producing a mold insert for injection molding according to the invention,

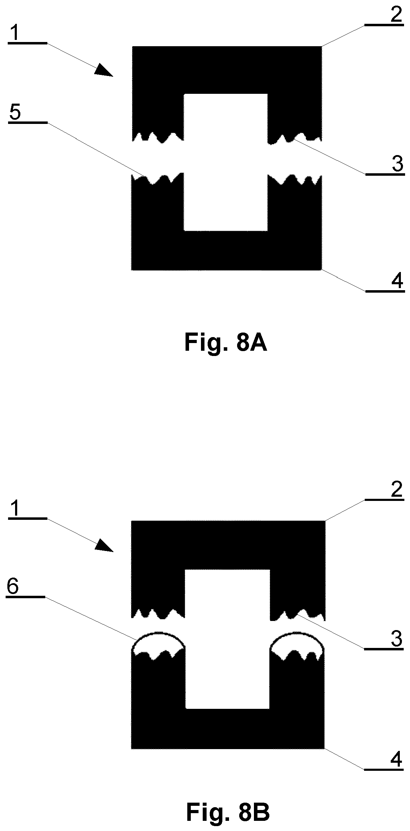

- Fig. 8A: presents schematically a first half and a second half of a mold insert for injection molding with the rough and porous contact surfaces prepared in a method according to the invention,
- Fig. 8B: presents schematically a first half and a second half of a mold insert for injection molding with a sealing layer applied on a contact surface of the second half in a method according to the invention,

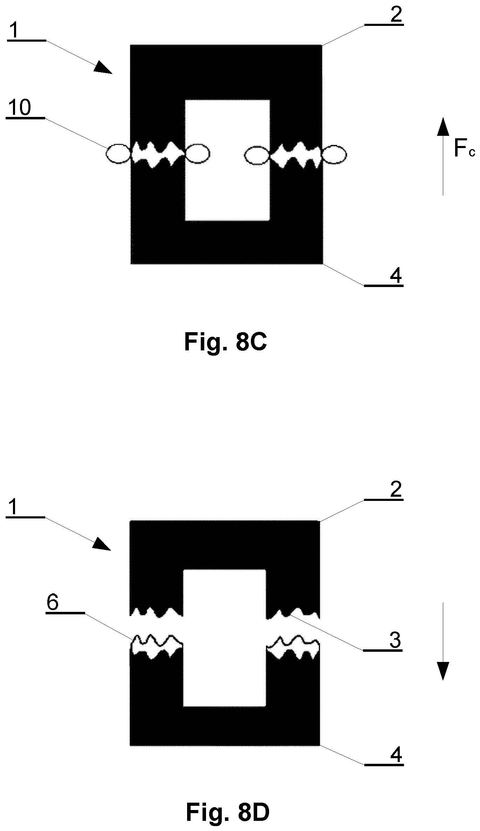

- Fig. 8C: presents schematically the step of clamping a first half and a second half of a mold insert for injection molding in a method according to the invention,
- Fig. 8D: presents schematically the step of opening a first half and a second half of a mold insert for injection molding in a method according to the invention.

### Detailed description of the invention

### A mold insert for injection molding

A mold insert 1 for injection molding comprising a first half 2 having a contact surface 3, and a second half 4 having a contact surface 5. The first half 2 and the second half 4 are made of tool steel. In the other embodiments of the invention the first half 2 and the second half 4 can be made of stainless steel, aluminum alloys, copper alloys, titanium alloys, zinc alloys or tin alloys. The first half 2 and the second half 4 of the mold insert 1 are prepared in a 3D printing process. In the other embodiments of the invention the first half 2 and the second half 4 of the mold insert 1 can be prepared in a metal casting process.

The second half 4 comprises on a portion of its contact surface 5 a sealing layer 6. The sealing layer 6 is located around the edges of its core forming part 8. In the other embodiments of the invention the sealing layer 6 can be located on a portion of the contact surface 3 of the first half 2 of the mold insert 1, in particular, around the edges of its cavity 7. A roughness Ra of the contact surfaces 3, 5 of the first and second halves 2, 4 of the mold insert 1 without said sealing layer 6 is from 5 µm to 20 µm.

The sealing layer 6 fills said portion of the rough and porous contact surface 5 located are around the edges of its core forming part 8. The sealing layer 6 has a shape corresponding to a shape of the contact surface 3 of the first half 2 of the mold insert 1, and the sealing layer 6 is made of a material softer than a material said first and second halves 2, 4 of the mold insert 1 are made of and a material having heat resistance allowing to withstand an injection process. For example, the sealing layer 6 is made of lead. In the other embodiments of the invention the sealing layer 6 can be made of tin, zinc, aluminum, copper or alloys of these metals.

The application of the sealing layer 6 on the portion of the contact surface 5 of the second half 4 of the mold insert 1, wherein the sealing layer 6 fills said portion of the rough and porous contact surface 5, the sealing layer 6 has the shape corresponding to the shape of the contact surface 3 of the first half 2 of the mold insert 1, and the sealing layer 6 is made of the material softer than the material said first and second halves 2, 4 of the mold insert 1 are made of and the material having heat resistance allowing to withstand an injection process ensures improved tightness, and as a result sealing, between the contact surfaces 3, 5 of the first and second half 2, 4 compared to mold inserts known from the state of the art. Thus, the application of the sealing 6 layer as disclosed prevents formation of flash during an injection process and eliminates the necessity to develop injection molds with complex constructions for this purpose. The same results are achieved when the sealing layer 6 is located on the contact surface 3 of the first half 2 of the mold insert 1.

Further, the location of the sealing layer 6 around the edges of its core forming part 8 ensures maintenance of improved tightness while reducing the amount of material used to form said sealing layer 6. The same results are achieved when the sealing layer 6 is located around the edges of a cavity 7 of the first half 2 of the mold insert 1.

Furthermore, a thickness of the sealing layer 6 is from 5 µm to 500 µm, for example 50 µm.

### A mold for injection molding

A mold 9 for injection molding comprises the mold insert 1 as disclosed. The mold 9 and the mold insert 1 can constitute a single body prepared during a single 3D printing process or a metal casting process.

### A method for producing a mold insert for injection molding

In a method for producing a mold insert for injection molding in the first step a first half 2 and a second half 4 of a mold insert 1 are prepared 101. The first half 2 and the second half 4 of the mold insert 1 are prepared in a 3D printing process. In the other embodiments of the invention the first half 2 and the second half 4 of the mold insert 1 can be prepared in a metal casting process. The first half 2 and the second half 4 are made of tool steel. In the other embodiments of the invention the first half 2 and the second half 4 can be made of stainless steel, aluminum alloys, copper alloys, titanium alloys, zinc alloys or tin alloys.

Next, a sealing layer 6 is applied 102 on a portion of a contact surface 5 of the second half 4 of the mold insert 1 to fill said portion of the rough and porous contact surface 5. In particular, the sealing layer 6 is applied around the edges of a core forming part 8 of the second half 4 of the mold insert 1. In the other embodiments of the invention the sealing layer 6 can be applied on a portion of a contact surface 3 of the first half 2 of the mold insert 1, in particular around the edges of its cavity 7. The sealing layer 6 is applied 102 by soldering. In the other embodiments of the invention the sealing layer 6 can be applied by spraying, surfacing, pad welding, plating, electroplating or gluing. A roughness Ra of the contact surfaces 3, 5 of the first and second halves 2, 4 of the mold insert 1 without said sealing layer 6 is from 5 µm to 20 µm.

The sealing layer 6 is made of a material softer than a material said first and second halves 2, 4 of the mold insert 1 are made of and the material having heat resistance allowing to withstand an injection process. For example, the sealing layer 6 is made of lead. In the other embodiments of the invention the sealing layer 6 can be made of tin, zinc, aluminum, copper or alloys of these metals.

In the further step, the first half 2 and the second half 4 of the mold insert 1 are clamped 103 to form in the sealing layer 6 a shape corresponding to a shape of a contact surface 3 of the first half 2 of the mold insert 1, wherein during said clamping 103 a force Fc higher than the yield strength of the material of the sealing layer 6 and higher than a nominal mold clamping force is used. After that, the first half 2 and the second half 4 of the mold insert 1 are opened 104.

The disclosed method steps ensure production of a mold insert for injection molding which is simpler and faster than production known from methods of the prior art as well as provides the mold insert that prevents the occurrence of flash during an injection molding process. The same results are achieved when the sealing layer 6 is applied on a portion of the contact surface 3 of the first half 2 of the mold insert 1.

Further, after the step of opening 104 the first half 2 and the second half 4 of the mold insert 1, excess 10 of the sealing layer 6 formed during said clamping 103 is removed 106. In particular, the excess formed forms in the cavities of the produced mold insert 1, like cavity 7 of the first half 2 is removed.

The application of the step of removing 106 the excess 10 of the sealing layer 6 formed during the step of clamping 103 the first half 2 and the second half 4 of the mold insert 1 ensures that an element molded during an injection process obtains the desired shape as well as does not jam in the mold insert 1 and as a result in an injection mold 9, what may lead to damage of the injection mold 9.

Furthermore, when the sealing layer 6 is applied 102 on the contact surface 5 of the second half 4 of the mold insert 1 by soldering, spraying, surfacing or pad welding, the sealing layer 6 is solidified 105 before the step of clamping 103. Solidification of the sealing layer 6 is performed until a temperature of material of the sealing layer 6 is below the melting point of said material. This applies also to the situation when the sealing layer 6 is applied 102 on a portion of the contact surface 3 of the first half 2 of the mold insert 1, in particular around the edges of the cavity 7 of the first half 3.

## Claims

1. A mold insert (1) for injection molding comprising
- a first half (2) having a contact surface (3), and
- a second half (4) having a contact surface (5),
**characterized in that**
- one of the halves (2, 4) comprises at least on a portion of its contact surface (3, 5) a sealing layer (6),
wherein
- the sealing layer (6) fills at least a portion of the rough and porous contact surface (3, 5) of the one of the halves (2, 4),
- the sealing layer (6) has a shape corresponding to a shape of the contact surface (3, 5) of other of the halves (2, 4), and
- the sealing layer (6) is made of a material softer than a material said first and second halves (2, 4) of the mold insert (1) are made of and a material having heat resistance allowing to withstand an injection process.

2. The mold insert according to claim 1, wherein the sealing layer (6) is located on the contact surface (3, 5) of the one of the halves (2, 4) around the edges of its cavity (7) or core forming part (8).

3. The mold insert according to claim 1 or 2, wherein a thickness of the sealing layer (6) is from 5 µm to 500 µm.

4. The mold insert according to any of the preceding claims, wherein the sealing layer (6) is made of lead, tin, zinc, aluminum, copper or alloys of these metals.

5. The mold insert according to any of the preceding claims, wherein the first half (2) and the second half (4) are prepared in a 3D printing process or a metal casting process.

6. The mold insert according to any of the preceding claims, wherein the first half (2) and the second half (4) are made of metal.

7. The mold insert according to claim 6, wherein the first half (2) and the second half (4) are made of tool steel, stainless steel, aluminum alloys, copper alloys, titanium alloys, zinc alloys or tin alloys.

8. A mold (9) for injection molding comprising the mold insert (1) according to any of the claims from 1 to 7.

9. The mold according to claim 8, wherein the mold (9) and the mold insert (1) form a single body.

10. A method for producing a mold insert for injection molding comprising the steps of:
- preparing (101) a first half (2) and a second half (4) of a mold insert (1),
- applying (102) a sealing layer (6) at least on a portion of a contact surface (3, 5) of one of the halves (2, 4) of the mold insert (1) to fill at least a portion of the rough and porous contact surface (3, 5) of one of the halves (2, 4),
wherein the sealing layer (6) is made of a material softer than a material said first and second halves (2, 4) of the mold insert (1) are made of and the material having heat resistance allowing to withstand an injection process,
- clamping (103) the first half (2) and the second half (4) of the mold insert (1) to form in the sealing layer (6) a shape corresponding to a shape of a contact surface (3, 5) of the other of the halves (2, 4) of the mold insert (1),
wherein during said clamping (103) a force Fc higher than the yield strength of the material of the sealing layer (6) and higher than a nominal mold clamping force is used,
- opening (104) the first half (2) and the second half (4) of the mold insert (1).

11. The method according to claim 10, wherein the sealing layer (6) is applied (102) on the contact surface (3, 5) of one of the halves (2, 4) of the mold insert (1) around the edges of its cavity (7) or core forming part (8).

12. The method according to claim 10 or 11, wherein the sealing layer (6) is applied (102) on the contact surface (3, 5) of the one the halves (2, 4) of the mold insert (1) by soldering, spraying, surfacing, pad welding, plating, electroplating or gluing.

13. The method according to claim 12, wherein when the sealing layer (6) is applied (102) on the contact surface (3, 5) of the one the halves (2, 4) of the mold insert (1) by soldering, spraying, surfacing or pad welding, the sealing layer (6) is solidified (105) before the step of clamping (103).

14. The method according to claim 13, wherein solidification of the sealing layer (6) is performed until a temperature of material of the sealing layer (6) is below the melting point of said material.

15. The method according to any of the preceding claims from 10 to 14, wherein after the step of opening (104) the first half (2) and the second half (4) of the mold insert (1), excess (10) of the sealing layer (6) formed during said clamping (103) is removed (106).
